Europäisches Patentamt

European Patent Office

Office européen des brevets

(11) Veröffentlichungsnummer: **0 217 083**
**A1**

(12) # EUROPÄISCHE PATENTANMELDUNG

(21) Anmeldenummer: 86111166.4

(22) Anmeldetag: 12.08.86

(51) Int. Cl.4: **H01S 3/04 , H01S 3/03**

(30) Priorität: 30.09.85 DE 3534844

(43) Veröffentlichungstag der Anmeldung:
08.04.87 Patentblatt 87/15

(84) Benannte Vertragsstaaten:
CH DE FR GB IT LI NL SE

(71) Anmelder: **Siemens Aktiengesellschaft Berlin und München**
**Wittelsbacherplatz 2**
**D-8000 München 2(DE)**

(72) Erfinder: **Heynisch, Hinrich, Dr. rer. nat., Dipl.-Phys.**
**Im Birket 7**
**D-8032 Gräfelfing(DE)**
Erfinder: **Hübner, Klemens, Dipl.-Ing. FH**
**Zaunkönigstrasse 28**
**D-8012 Ottobrunn(DE)**

(54) **Luftgekühltes Entladungsrohr für einen Ionenlaser.**

(57) In einem Entladungsrohr für Ionenlaser, welches aus Kühlscheiben und Isolatorrohren zusammernge- setzt ist, ist die Laserleistung erhöht und der Einsatz relativ billiger Keramik für die Isolatorrohre ermöglicht, indem anstelle einzelner Kühlscheiben Kühlpakete (1) zwischen Isolatorrohren (2) angeord- net sind, wobei sich die Kühlpakete (1) aus metalli- schen Kühlscheiben (7) und dazwischen liegenden Abstandsscheiben (8) zusammensetzen. Die Erfin- dung eignet sich für Ionenlaser, insbesonder Argon- Laser mit relativ hoher Ausgangsleistung.

FIG 1

## Luftgekühltes Entladungsrohr für einen Ionenlaser

Die vorliegende Erfindung betrifft ein luftgekühltes Entladungsrohr für einen Ionenlaser gemäß Oberbegriff des Patentanspruchs 1. Ein derartiges Entladungsrohr ist aus der US-PS 3 753 144 bekannt. Dort folgt auf jede Kühlscheibe ein Keramikrohr, die Wärme wird aus dem Bereich des Entladungskanales über die Kühlscheiben abgeführt. Dabei weisen die Keramikrohre einen wesentlich größeren Durchmesser auf als der Entladungskanal und sind durch Abschirmungen von der direkten Bestrahlung aus dem Entladungskanal teilweise geschützt. Dieser Aufbau läßt sich jedoch nur bis zu einer mäßigen Leistung des Lasers einsetzen, da einerseits infolge der Erwärmung bei Verwendung von Wärmeableitscheiben aus gut wärmeleitfähigem Material, wie z.B. Kupfer, mechanische Spannungen auftreten, die zum Bruch der Isolatorrohre führen können und da andererseits auch bei Verwendung von Wärmeableitscheiben mit einem an den der Keramikrohre angepaßten Temperaturausdehnungskoeffizienten eine starke Erwärmung der Keramikrohre eintritt, die insbesondere bei unterschiedlicher Kühlung im Bereich des Umfangs der Keramikrohre zu einer Dejustierung der Spiegel des Hohlraumresonators und damit zu einer Verminderung der Laserleistung führt. Die Laserleistung wird üblicherweise nur innerhalb eines engbegrenzten Streubereichs um die optische Achse des Lasers gemessen, so daß eine Ablenkung des Strahles ebenso wie eine größere Streuung zu einer Minderung der gemessenen Laserleistung führt.

Daraus ergibt sich einerseits die Forderung nach einer sehr stabilen Ausführung des Laserrohres und damit die Forderung nach einem großen Durchmesser der Isolatorrohre. Damit ist jedoch eine ungleichmäßige Abkühlung der Isolatorrohre insbesondere bei Luftkühlung verbunden, was wiederum zu unterschiedlicher Ausdehnung der Isolatorrohre und damit zu einer Ablenkung des Laserstrahles führt. Diese Schwierigkeiten lassen sich teilweise durch den Einsatz von BeO-Keramik für das Isolatorrohr überwinden, wobei allerdings ein hoher Preis in Kauf genommen werden muß und wegen der Giftigkeit des BeO besondere Vorsichtmaßnahmen notwendig sind.

Die Aufgabe, die der vorliegenden Erfindung zugrundeliegt, besteht in der Steigerung der Leistung eines Ionenlasers mit einem Entladungsrohr gemäß dem Oberbegriff des Patentanspruchs 1 bei gleichzeitiger Kostensenkung.

Diese Aufgabe wird durch die kennzeichnenden Merkmale des Anspruchs 1 gelöst. Durch die erfindungsgemäße Ausbildung von Kühlpaketen wird nämlich ein erheblicher Teil der abzuführenden Wärme von den Verbindungstellen zu den Isolatorrohren ferngehalten, die Erwärmung der Isolatorrohre ist relativ gering, da wegen der Ausnehmungen in den Abstandsscheiben der Wärmeübergang von den Kühlscheiben zu den Isolatoren stark begrenzt, die Erwärmung also wesentlich geringer ist als bei kompakten Scheiben. Die einzelnen Kühlscheiben können relativ dünn ausgebildet sein, ermöglichen einen sehr schnellen Wärmeübergang an die umgebende Luft und weisen wegen der Ausnehmungen der Zwischenscheiben im Bereich der Isolatorrohre eine relativ hohe Duktilität auf, so daß auch Isolatorrohre mit einem Temperaturausdehnungskoeffizienten, der von dem der Kühlscheiben unterschiedlich ist, ohne die Gefahr eines Bruches der Isolatorrohre eingesetzt werden können.

Ein zusätzlicher Schutz gegen Erwärmung und gegen eine Schädigung der Isolatorrohre durch die Laserstrahlung ist gegeben, indem auf den Stirnseiten der Kühlpakete Abschirmungen angebracht sind, indem der Durchmesser von jeweils zwei einander gegenüberliegenden Abschirmungen unterschied lich ist, indem die beiden Abschirmungen einander in radialer Richtung überlappen und indem auch der Innendurchmesser der kleineren Abschirmung erheblich größer ist als der Durchmesser des Entladungskanals. Die so ausgestalteten Abschirmungen erhitzen sich nicht unzulässig und ermöglichen den Ausgleich von Fetigungstoleranzen, ohne daß die Strahlung bei ungünstiger Toleranzlage an die Isolatorrohre gelangen kann. Die Abschirmungen sind vorteilhaft topfförmig ausgebildet und mit dem Kühlpaket verlötet oder verschweißt. In diesem Fall besitzen die Abschirmungen ein zum Entladungskanal konzentrisches Lock mit einem Durchmesser, der zumindest dem des Entladungskanals entspricht.

Die erfindungsgemäßen Kühlscheiben und die Abstandsscheiben bestehen vorteilhaft im wesentlichen aus Kupfer, wobei die Kühlscheiben ca. 0,5mm und die Abstandsscheiben ca. 0,6mm dick sind. Die daraus gebildeten Kühlpakete lassen sich ohne Schwierigkeiten mit Isolatorrohren aus $Al_2O_3$-Keramik vakuumdicht verlöten und besitzen eine ausreichende Duktilität, so daß auch bei häufigen Temperaturwechseln keine Beschädigungen der Isolatorrohre auftreten. Durch diesen Aufbau können bei gleicher Größe des Entladungsrohres wesentlich höhere Laserleistungen vewirklicht werden.

Ein vorteilhaftes Dimensionierungsbeispiel ist gegeben, indem jedes Kühlpaket fünf Kühlscheiben enthält, indem der Durchmesser des Entladungskanals 1mm, der Innendurchmesser der Isolatorrohre 20mm, deren Außendurchmesser 24mm und die Länge der Isolatorohre 3mm betragen, indem die Isolatorohre aus Al$_2$O$_3$-Keramik bestehen und indem die Kühlscheiben und die Abstandsscheiben jeweils aus Kupfer bestehen. Mit einem derartigen Aufbau läßt sich z.B. ein Toleranzkreis für den Laserstrahl von 25μm bei einem Abstand von 25cm einhalten.

Die Erfindung wird nun anhand von drei Figuren näher erläutert.

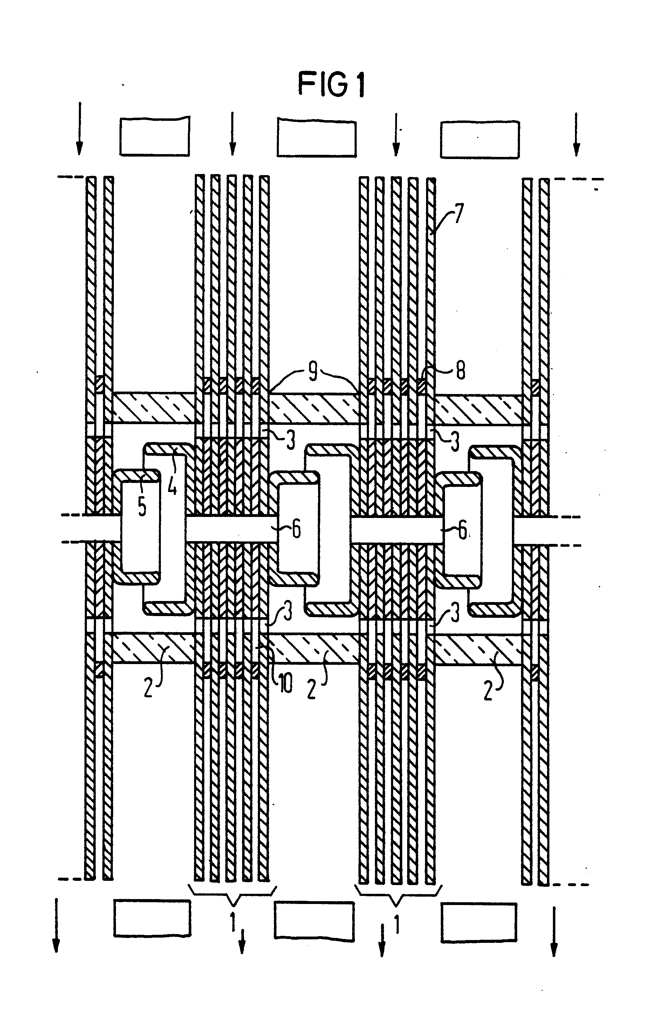

Fig. 1 zeigt ein erfindungsgemäßes Entladungsrohr in geschnittener Ansicht.

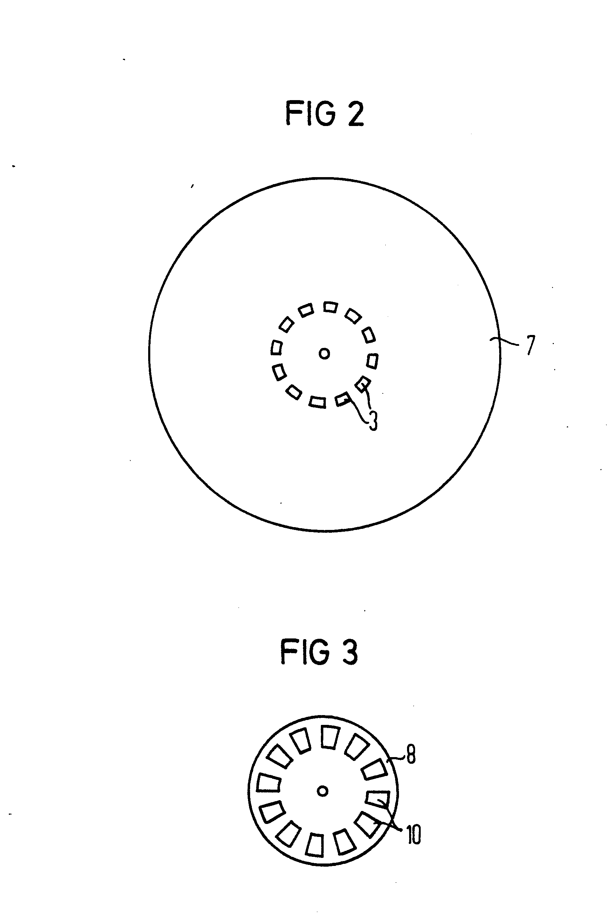

Fig. 2 zeigt eine Draufsicht auf eine Kühlscheibe,

Fig. 3 eine Draufsicht auf eine Abstandsscheibe.

Das Entladungsrohr eines Lasers wird aus Kühlpaketen 1 gebildet, welche durch Isolatorrohre 2 miteinander vakuumdicht verbunden sind. Die Kühlpakete 1 sind aus Kühlscheiben 7 und Abstandsscheiben 8 zusammengesetzt, wobei diese Scheiben vakuumdicht miteinander verschweißt oder verlötet sind. Topfförmige Abschirmungen 4 und 5 sind auf den beiden Stirnflächen jedes Kühlpaketes 1 angebracht, wobei jeweils eine Abschirmung 4 mit größerem Durchmesser einer Abschirmung 5 mit kleinerem Durchmesser des benachbarten Kühlpaketes gegenübersteht. Diese beiden Abschirmungen 4 und 5 überlappen sich in Richtung des Entladungskanals 6 und schirmen die Strahlung des Lasers, die im Entladungskanal 6 entsteht, von den Isolatorrohren 2 ab.

Ausnehmungen 10 in in den Abstandsschriben 8 überlappen Ausnehmungen 3 in den Kühlscheiben 7. Sie bilden einen Rückflußkanal für Lasergas. Die Ausnehmungen 3 reichen in radialer Richtung bis zur Innenwand der Isolattorrohre 2, die Ausnehmungen 10 reichen in radialer Richtung zumindest bis zur Außenwand der Isolatorrohre 2. Mehrere derartige Ausnehmungen sind auf jeder Kühl-bzw. Abstandsscheibe in gleichem Abstand vom Entladungskanal über einen Kreisumfang gleichmäßig verteilt angeordnet. Die Kühlscheiben bestehen aus einem duktilen und gut wärmeleitenden Material, insbesondere aus Kupfer. Die Abstandsscheiben bestehen aus einem gut wärmeleitenden Material, vorteilhaft ebenfalls aus Kupfer oder aus Kupferlegierungen. Dadurch ist gewährleistet, daß die unterschiedliche Wärmeausdehnungen im Bereich der Verbindungsstelle 9 zwischen dem Isolatorrohr 2 und dem Kühlpaket 1 ermöglicht. So können beispielsweise Isolatorrohre aus der stabilen und relativ billigen Al$_2$O$_3$-Keramik eingesetzt werden.

Die Kühlscheiben können einen beliebig geformten Umfang ausweisen. Vorzugsweise sind sie kreisförmig oder rechteckförmig ausgebildet. Das Entladungsrohr ist zweckmäßigerweise in einem Luftkanal mit geringen Abständen zu den Kanalwänden eingebaut. Der Luftkanal weist vorzugsweise Luftschächte auf, deren Öffnungen jeweils in Lage und lichter Weite einem Kühlpaket entsprechen. Dadurch wird die Kühlluft mit hohem Wirkungsgrad z.B. in Pfeilrichtung zwischen die Kühlscheiben geblasen bzw. gesaugt, die Kühlung wird besonders wirkungsvoll gestaltet.

## Ansprüche

1. Luftgekühltes Entladungsrohr für einen Ionenlaser, welches gegeneinander elektrisch sisolierte Kühlscheiben enthält, wobei der Entladungskanal durch koaxial zueinander angeordnete Öffnungen in den Kühlscheiben gebildet ist, wobei konzentrisch zum Entladungskanal an Kühlscheiben Abschirmungen angebracht sind, welches Isolierrohre enthält, welche mit Kühlscheiben vakuumdicht verlötet und zum Entladungsrohr zumindest annähernd koaxial angeordnet sind, wobei der Innendurchmesser des Isolatorrohres um ein Mehrfaches größer ist als der Durchmesser des Entladungskanals und die Länge der Isolatorrohre kleiner ist als ihr Durchmesser, **dadurch gekennzeichnet**, daß mehrere Kühlscheiben aus Metall mit zwischen ihnen angeordneten Abstandsscheiben, ebenfalls aus Metall, zu Kühlpaketen vakuumdicht verbunden sind, daß mit den Stirnflächen der so gebildeten Kühlpakete die Isolatoren vakuumdicht verlötet sind, daß die Kühlscheiben und die Abstandsscheiben gegenüber der Achse des Entladungsrohres radial versetzte Ausnehmungen aufweisen, daß sich die Ausnehmungen benachbarter Scheiben überlappen, daß im gleichen Abstand von der Achse des Entladungskanals mehrere Ausnehmungen in den Scheiben angeordnet sind, daß die Ausnehmungen in den Kühlscheiben in radialer Richtung höchstens bis zur Innenwand der angrenzenden Isolatorrohre reichen, daß die Ausnehmungen in den Abstandsscheiben in radialer Richtung zumindest bis zur Außenwand der angrenzenden Isolatorrohre reichen und daß mit dem Entladungsrohr die Spiegel des Resonators mechanisch fest verbunden sind.

2. Entladungsrohr nach Anspruch 1, **dadurch gekennzeichnet**, daß auf den Stirnseiten der Kühlpakete Abschirmungen angebracht sind, daß der Durchmesser von jeweils zwei einander gegenüber liegenden Abschirmungen unterschiedlich ist, daß sich diese Abschirmungen in radialer Richtung überlappen und daß auch der Innendurchmesser der kleineren Abschirmung erheblich größer ist als der Durchmesser des Entladungskanals.

3. Entladungsrohr nach einem der Ansprüche 1 bis 2, **dadurch gekennzeichnet**, daß die Kühlscheiben und die Abstandsscheiben im wesentlichen aus Kupfer bestehen, daß die Kühlscheiben 0,5mm und die Abstandsscheiben ca. 0,6mm dick sind, daß die Isolatorrohre aus $Al_2O_3$-Keramik bestehen und daß die Isolatorrohre mit den Kühlscheiben vakuumdicht verlötet sind.

4. Entladungsrohr nach einem der Ansprüche 1 bis 3, **dadurch gekennzeichnet**, daß seine Außenabmessungen an die Innenabmessungen eines Kühlkanals angepaßt sind, in welchem Kühlluft senkrecht zum Entladungskanal angeblasen oder abgesaugt werden kann, und daß Öffnungen im Kühlkanal für die Zufuhr und/oder Absaugung von Kühlluft in ihrer Weite und Lage der Stärke und Lage der Kühlpakete angepaßt sind, so daß die Kühlluft hierdurch zum überwiegenden Teil durch die Kühlpakete hindurch geblasen bzw. gesaugt wird.

# FIG 1

## FIG 2

## FIG 3

| | EINSCHLÄGIGE DOKUMENTE | | EP 86111166.4 |
|---|---|---|---|
| **Kategorie** | **Kennzeichnung des Dokuments mit Angabe, soweit erforderlich, der maßgeblichen Teile** | **Betrifft Anspruch** | **KLASSIFIKATION DER ANMELDUNG (Int. Cl.4)** |
| D,A | US - A - 3 753 144 (KEARNS)<br><br>* Fig. 2,3; Spalte 5, Zeile 60 - Spalte 7, Zeile 21; insbesonders Spalte 6, Zeile 46 *<br><br>-- | 1,2,3 | H 01 S 3/04<br><br>H 01 S 3/03 |
| A | US - A - 4 001 720 (CARBONETTA)<br><br>* Fig. 1,2; Spalte 2, Zeilen 10-54 *<br><br>-- | 1 | |
| A | DE - B2 - 1 764 359 (LEXEL)<br><br>* Fig. 5-9; Spalte 3, Zeilen 25-48 *<br><br>-- | 1,3 | |
| A | US - A - 3 501 714 (MYERS)<br><br>* Fig. 1-3; Spalte 4, Zeile 9 - Spalte 5, Zeile 5; insbesonders Spalte 4, Zeile 39; Spalte 5, Zeile 2 *<br><br>-- | 1 | **RECHERCHIERTE SACHGEBIETE (Int. Cl.4)** |
| A | US - A - 4 378 600 (HOBART)<br><br>* Fig. 1-3,12; Spalte 5, Zeilen 7-67 *<br><br>-- | 1,2 | H 01 S |
| A | US - A - 3 437 950 (OKAYA)<br><br>* Fig. 2; Spalte 4, Zeile 66 - Spalte 5, Zeile 54 *<br><br>-- | 1,3,4 | |

Der vorliegende Recherchenbericht wurde für alle Patentansprüche erstellt.

| **Recherchenort** | **Abschlußdatum der Recherche** | **Prüfer** |
|---|---|---|
| WIEN | 23-10-1986 | HEINICH |

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|-----------|------------------------------------------------------------------------------------|-------------------|-------------------------------------------|

**EINSCHLÄGIGE DOKUMENTE** — EP 86111166.4

| A | US - A - 3 622 910 (KANTROWITZ)<br>* Fig. 6; Spalte 6, Zeile 67 – Spalte 7, Zeile 8 *<br><br>----- | 1,4 | |

RECHERCHIERTE
SACHGEBIETE (Int. Cl.4)

Der vorliegende Recherchenbericht wurde für alle Patentansprüche erstellt.

| Recherchenort | Abschlußdatum der Recherche | Prüfer |
|---------------|------------------------------|--------|
| WIEN | 23-10-1986 | HEINICH |